# EUROPÄISCHE PATENTSCHRIFT

(11) **EP 3 301 787 B1**
(45) Veröffentlichungstag und Bekanntmachung des Hinweises auf die Patenterteilung: **13.11.2019**
(21) Anmeldenummer: 17184663.7
(22) Anmeldetag: 03.08.2017
(51) Int. Cl.: H02K 1/32, H02K 9/19, H02K 7/116

(54) **ELEKTRISCHE MASCHINE MIT KÜHLSYSTEM**
ELECTRIC MACHINE WITH COOLING SYSTEM
MACHINE ÉLECTRIQUE AVEC SYSTÈME DE REFROIDISSEMENT

(30) Priorität: 29.09.2016 DE 102016218819
(43) Veröffentlichungstag der Anmeldung: 04.04.2018
(73) Patentinhaber: AUDI AG, 85045 Ingolstadt (DE)
(72) Erfinder: Pohlmann, Axel, 85134 Stammham (DE); Werner, Stephan, 04720 Großweitzschen - OT Mockritz (DE); Dinauer, Franz, 93138 Lappersdorf (DE)

(56) Entgegenhaltungen:
- JP-A- 2012 095 381
- JP-A- 2012 105 457

## Beschreibung

Die Erfindung betrifft eine elektrische Maschine.

Eine elektrische Maschine umfasst ein bspw. als Rotor zu bezeichnendes Bauteil, das sich bei dessen Betrieb dreht. Aufgrund dessen sowie aufgrund von Strömen, die durch elektrische Leiter der elektrischen Maschine fließen, kann sich diese erhitzen. Allerdings kann die elektrische Maschine durch ein Kühlsystem gekühlt werden.

Die Druckschrift DE 10 2013 104 711 A1 beschreibt eine elektrische Maschine mit einer Rotorwelle und einer Einrichtung zum Kühlen der Rotorwelle, wobei die Rotorwelle als Hohlwelle ausgebildet ist. Hierbei ist vorgesehen, dass die Kühleinrichtung eine stationäre Kühllanze aufweist, die die Hohlwelle axial durchsetzt. Die Kühllanze weist einen Einlass und einen Auslass für ein Kühlmedium sowie einen mit dem Einlass und dem Auslass verbundenen Kühlkanal, der die Kühllanze axial durchsetzt, auf.

Die Druckschrift EP 0 660 492 A1 beschreibt ein Kühlsystem für einen Elektromotor mit einem Getriebekasten, einer flüssigkeits-innengekühlten, allenfalls hohlen Rotorwelle und einem außen gekühlten Stator für den Elektromotor. Das Kühlsystem umfasst eine Wellenkühlung, die eine hohe Auswertung des Elektromotors ermöglicht und auch für gekapselte und daher geräuscharme Elektromotoren angewendet werden kann.

Weiterhin ist aus der Druckschrift EP 1 168 572 A2 eine rotierende elektrische Maschine mit gekühlten hohlen Rotorwellen bekannt.

Die Druckschrift JP 2012-105457 A beschreibt einen Motor mit einem Rotor, der sich um eine Welle dreht, einem Stator, der den Rotor umschließt, und einer Kühlleitung für Öl, die mit einem Behälter für das Öl verbunden ist, wobei das Öl mit Wasser gekühlt wird.

Vor diesem Hintergrund stellt sich die Aufgabe, für eine elektrische Maschine eine Kühlung zu verbessern.

Diese Aufgabe wird mit einer elektrischen Maschine mit den Merkmalen des unabhängigen Patentanspruchs gelöst. Ausführungsformen der elektrischen Maschine gehen aus den abhängigen Patentansprüchen und der Beschreibung hervor.

Die erfindungsgemäße elektrische Maschine weist ein Gehäuse, eine Antriebswelle zum Antreiben einer externen Vorrichtung, eine Rotorwelle für einen Rotor der elektrischen Maschine und ein Kühlsystem auf, wobei die Antriebswelle und die Rotorwelle relativ zu dem Gehäuse drehbar sind. Das Kühlsystem ist zum Kühlen der elektrischen Maschine vorgesehen. Das Kühlsystem umfasst als Komponenten zumindest eine erste und eine zweite Hülse, wobei eine erste Hülse die Antriebswelle koaxial umschließt, wobei eine zweite Hülse die erste Hülse koaxial umschließt. Die erste Hülse und die zweite Hülse begrenzen einen ersten Strömungsraum für ein Kühlmedium. Außerdem umschließt bzw. begrenzt die Rotorwelle die zweite Hülse koaxial, wobei die zweite Hülse und die Rotorwelle einen zweiten Strömungsraum für das Kühlmedium begrenzen bzw. umschließen. Die zweite Hülse ist dazu ausgebildet, den ersten und zweiten Strömungsraum des Kühlsystems voneinander zu trennen. Die beiden Hülsen des Kühlsystems sind mit dem Gehäuse stationär verbunden und somit daran befestigt.

Bei einem Betrieb der elektrischen Maschine und des Kühlsystems dreht die Antriebswelle innerhalb der ersten Hülse mit einer Drehzahl der anzutreibenden Vorrichtung und die Rotorwelle mit der Drehzahl des Rotors um die zweite Hülse herum.

Es ist vorgesehen, dass die Antriebswelle, die beiden Hülsen sowie die Rotorwelle als Zylinder bzw. zylinderförmig ausgebildet sind und eine gemeinsame Symmetrieachse aufweisen.

In Ausgestaltung ist ein erster der beiden Strömungsräume bzw. Strömungskanäle als Vorlauf und ein zweiter der beiden Strömungsräume bzw. Strömungskanäle als Rücklauf für das Kühlmedium verwendbar bzw. zu verwenden. Bei einem Betrieb des Kühlsystems ist vorgesehen, dass das Kühlmedium in einer ersten axial orientierten Richtung durch den Vorlauf strömt bzw. transportiert wird. Weiterhin strömt das Kühlmedium in einer radialen Richtung von dem Vorlauf zu dem Rücklauf bzw. wird in der radialen Richtung transportiert. Außerdem ist vorgesehen, dass das Kühlmedium in einer zweiten axial orientierten Richtung, die entgegengesetzt zu der ersten axial orientierten Richtung orientiert ist, durch den Rücklauf strömt bzw. transportiert wird. Dabei ergibt sich in einer der beiden Richtungen, in der Regel in der ersten Richtung, wenn das Kühlmedium im Vorlauf zwischen den beiden stationären Hülsen strömt, für das Kühlmedium eine stationäre Flüssigkeitssäule. Fließt das Kühlmedium im Rücklauf in entgegengesetzter Richtung, wird die Flüssigkeitssäule aufgrund einer Drehung der Rotationswelle ebenfalls gedreht.

Die beiden Strömungsräume bzw. Strömungsbereiche sind durch und/oder über einen Übergangsbereich miteinander verbunden, wobei das Kühlmedium in der radialen Richtung durch den Übergangsbereich strömen bzw. transportiert werden kann.

In Ausgestaltung umschließt der als Rücklauf ausgebildete Strömungsraum den als Vorlauf ausgebildeten Strömungsraum koaxial, wobei sich in dem Vorlauf zwischen den beiden stationären Hülsen für das Kühlmedium die stationäre Flüssigkeitssäule und in dem Rücklauf zwischen der zweiten stationären Hülse und der sich drehenden Rotorwelle die rotierende Flüssigkeitssäule ergibt.

Hierbei umschließt die Rotorwelle die Antriebswelle koaxial, wobei Komponenten, zumindest Hülsen, des Kühlsystems zwischen der Antriebswelle und der Rotorwelle angeordnet sind.

Die Rotorwelle als Träger des Rotors ist dazu ausgebildet, den Rotor relativ zu einem Stator mit der Drehzahl der elektrischen Maschine zu drehen. Die Antriebswelle ist zum Antreiben der externen Vorrichtung dazu ausgebildet, sich mit einer Drehzahl der externen Vorrichtung zu drehen. Dabei können sich diese beiden Drehzahlen durch eine Differenzdrehzahl voneinander unterscheiden.

Mit dem vorgestellten Kühlsystem, das von der Rotorwelle umschlossen ist, ist es möglich, die Rotorwelle kavitationsfrei zu kühlen.

In der elektrischen Maschine umschließt die hohle Rotorwelle die Antriebswelle der elektrischen Maschine, die auch als Flanschwelle ausgebildet sein und/oder bezeichnet werden kann. Hierbei ist es möglich, dass die Rotorwelle an ihrer Innenkontur, die den zweiten Strömungsraum für das Kühlmedium als Außenwandung begrenzt, gekühlt wird. Der Einlass am Vorlauf sowie der Auslass am Rücklauf sind auf einer ersten Seite zwischen der Antriebswelle und der Rotorwelle und somit der elektrischen Maschine angeordnet, wohingegen der Übergangsbereich zwischen Vorlauf und Rücklauf an einer hierzu gegenüberliegenden zweiten Seite der Antriebswelle und der Rotorwelle und somit der elektrischen Maschine angeordnet ist. Dabei kann das Kühlmedium den Vorlauf und den Rücklauf in entgegengesetzten Richtungen axial durchströmen. Dabei ist es möglich, für die Rotorwelle und somit für den sich damit drehenden Rotor auch bei hohen Drehzahlen von mehr als 5000 Umdrehungen pro Minute eine Kühlung zu gewährleisten, wobei das Kühlmedium das Kühlsystem kavitationsfrei durchströmen kann.

Dabei strömt das Kühlmedium zwischen den beiden stationären bzw. feststehenden sowie zylinderförmigen Hülsen der Kühlhülsenpatrone, die üblicherweise den als Vorlauf ausgebildeten Strömungsraum sowie dessen Einlass begrenzen und/oder beranden, wobei der Einlass einen kleinstmöglichen Durchmesser aufweist und somit nur wenig Bauraum benötigt. Innerhalb des Vorlaufs bildet das Kühlmedium eine axiale Flüssigkeitssäule. In dem als Rücklauf ausgebildeten Strömungsraum bzw. Strömungsbereich wird das Kühlmedium aufgrund der Rotorwelle, die den Rücklauf als zweiten Strömungsraum begrenzt und dessen Außenwandung bildet, in Rotation versetzt. Somit wird eine rotierende Flüssigkeitssäule gebildet. Dadurch wird ein radialer bzw. ein rotatorischer Anteil eines Stroms des Kühlmediums erst an der Innenkontur der Rotorwelle gebildet.

Das zwischen der Antriebswelle und der Rotationswelle koaxial angeordnete Kühlsystem, das u. a. einen Innenraum und/oder Kern der Rotationswelle bildet, steht somit für Kühlmaßnahmen zur Verfügung.

Die elektrische Maschine weist auch einen Stator auf, wobei sich der Rotor relativ zu dem Stator drehen kann. In einem generatorischen Betrieb der elektrischen Maschine wird mechanische Energie in elektrische Energie umgewandelt, wohingegen in einem motorischen Betrieb elektrische Energie in mechanische Energie umgewandelt wird.

Als Komponenten des Kühlsystems werden die beiden stationären Hülsen zwischen der Antriebswelle bzw. der Flanschwelle und der Rotorwelle genutzt, wobei die beiden stationären Hülsen außerhalb einer zentralen Achse, d. h. Symmetrieachse bzw. Rotationsachse, der Rotorwelle sowie der Antriebswelle angeordnet sind. Somit ergibt sich gegenüber dem Stand der Technik, dass auf eine ansonsten übliche Kühllanze auf einem Mittelpunkt einer Achse einer Welle verzichtet werden kann.

Weiterhin ist die Antriebswelle bzw. Flanschwelle, die innerhalb der ersten Hülse angeordnet ist, von dem Kühlmedium, bspw. Wasser oder Öl abgedichtet.

Beim Betrieb der elektrischen Maschine dreht sich der an der Rotorwelle angeordnete Rotor mit einer Drehzahl der elektrischen Maschine relativ zu dem Stator. Dagegen dreht sich die innerhalb der Rotorwelle und des Kühlsystems angeordnete Antriebswelle mit einer Drehzahl einer damit anzutreibenden externen Vorrichtung, bspw. einem Rad, die bzw. das als Komponente eines Kraftfahrzeugs ausgebildet sein kann. Ein Zwischenraum zwischen der Antriebs- bzw. Flanschwelle und der Rotorwelle wird mit Hilfe der stationären bzw. stehenden Hülsen zur Kühlung der Rotorwelle verwendet, wobei das Kühlmedium kavitationsfrei strömen kann.

Weitere Vorteile und Ausgestaltungen der Erfindung ergeben sich aus der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand einer Ausführungsform in der Zeichnung schematisch dargestellt und wird unter Bezugnahme auf die Zeichnung schematisch und ausführlich beschrieben.

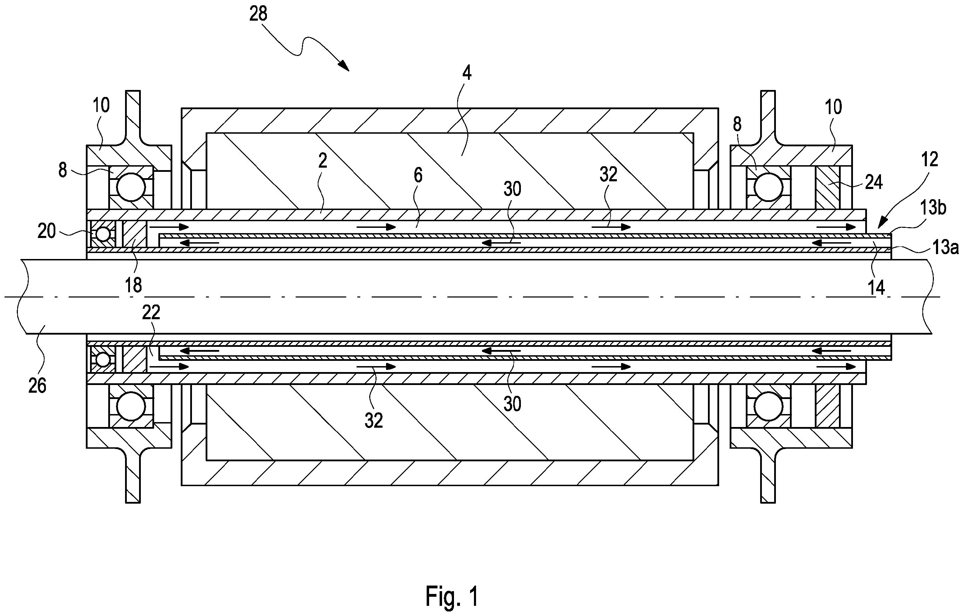

Figur 1 zeigt in schematischer Darstellung ein Detail einer Ausführungsform der erfindungsgemäßen elektrischen Maschine, die eine Ausführungsform eines Kühlsystems umfasst.

Das in Figur 1 schematisch dargestellte Detail der elektrischen Maschine umfasst eine zylinderförmige Rotorwelle 2 für einen Rotor 4, einen als Vorlauf ausgebildeten ersten Strömungsraum 14 für ein flüssiges Kühlmedium, zwei Lager 8, ein Gehäuse 10, eine an dem Gehäuse 10 stationär bzw. ortsfest angeordnete Kühlhülsenpatrone 12 mit zwei zylinderförmigen Hülsen 13a, 13b zum Kühlen, einen als Rücklauf ausgebildeten zweiten Strömungsraum 6, eine erste Dichtung 18, mindestens ein Stützlager 20 für die Kühlhülsenpatrone 12, einen Übergangbereich 22 zwischen den beiden Strömungsräumen 6, 14, eine zweite Dichtung 24 und eine zylinderförmige Antriebswelle 26.

Bei einem Betrieb der elektrischen Maschine dreht sich der Rotor 4 relativ zu einem nicht weiter dargestellten Stator mit einer Drehzahl der elektrischen Maschine. Die Antriebswelle 26 ist zum Antreiben einer externen Vorrichtung, hier bspw. eines Rads zum Antreiben bzw. Fortbewegen eines Kraftfahrzeugs ausgebildet, wobei sich die Antriebswelle 26 mit einer Drehzahl der externen Vorrichtung, hier des Rads, dreht.

Außerdem sind die Rotorwelle 2 und die Antriebswelle 26 über ein hier nicht weiter dargestelltes Getriebe miteinander verbunden. Dabei ist dieses Getriebe an der Rotorwelle 2 und der Antriebswelle 26 seitlich angeflanscht. So ist es möglich, dass sich die Rotorwelle 2 und die Antriebswelle 26 beim Betrieb gleichzeitig mit unterschiedlichen Drehzahlen drehen, die sich durch eine Differenzdrehzahl voneinander unterscheiden.

Dabei ist die Antriebswelle 26 von dem als Vorlauf ausgebildeten ersten Strömungsraum 14 koaxial umschlossen, der wiederum von dem als Rücklauf ausgebildeten zweiten Strömungsraum 6 koaxial umschlossen ist, der von der Rotorwelle 2 des Rotors 4 koaxial umschlossen ist. Zumindest die beiden Strömungsräume 6, 14 und der Übergangsbereich 22, der die beiden Strömungsräume 6, 14 verbindet, sind als Komponenten des Kühlsystems 28 ausgebildet und werden zum Transport des Kühlmediums verwendet.

Bei einem Betrieb des Kühlsystems 28 strömt das Kühlmedium axial bzw. in axialer Richtung in den als Vorlauf ausgebildeten ersten Strömungsraum 14 ein, was hier durch Pfeile 30 innerhalb des ersten Strömungsraums 14 angedeutet ist. Weiterhin strömt das Kühlmedium aus dem ersten Strömungsraum 14 in radialer Richtung bzw. radial von innen nach außen durch den Übergangsbereich 22 in den zweiten Strömungsraum 6, aus dem das Kühlmedium in axialer Richtung ausströmt und zusätzlich in Rotation versetzt wird, was hier durch Pfeile 32 innerhalb des als Rücklauf ausgebildeten zweiten Strömungsraums 6 angedeutet ist.

Bei der elektrischen Maschine ist die Antriebswelle 26 baulich innerhalb der hier hohlen Rotorwelle 2 angeordnet und von der Rotorwelle 2 koaxial umschlossen. In einem Bauraum zwischen der Antriebswelle 26 und der Rotorwelle 2 ist die stationäre Kühlhülsenpatrone 12 angeordnet. Dabei umfasst die Kühlhülsenpatrone 12 die zwei zueinander koaxial angeordneten zylinderförmigen Hülsen 13a, 13b, wobei eine erste innere Hülse 13a die Antriebswelle 26 umschließt und eine Innenwandung des ersten Strömungsraums 14 bildet. Eine äußere Hülse 13b bildet hier eine Außenwandung des ersten Strömungsraums 14 sowie eine Innenwandung des zweiten Strömungsraums 6. Die Rotorwelle 2 bildet zugleich eine Außenwandung des zweiten Strömungsraums 6.

Bei einem Betrieb der elektrischen Maschine können sich die Antriebswelle 26 und die Rotorwelle 2 relativ zueinander sowie relativ zu dem Gehäuse 10 drehen. Dagegen sind die beiden Hülsen 13a, 13b der Kühlhülsenpatrone 12 mit dem Gehäuse 10 stationär verbunden und somit relativ zu der Antriebswelle 26 und der Rotorwelle 2 ortsfest angeordnet.

Somit trennt die zweite äußere Hülse 13b der stationären Kühlhülsenpatrone 12 das Kühlmedium, das in die Rotorwelle 2 durch bzw. über den als Vorlauf ausgebildeten ersten Strömungsraum 14 axial einströmt, von Kühlmedium, das aus der Rotorwelle 2 durch bzw. über den zweiten als Rücklauf ausgebildeten Strömungsraum 6 radial ausströmt. Dabei wird eine Innenkontur der Rotorwelle 2, die die Außenwandung des zweiten Strömungsraums 6 bildet, ausschließlich in einer Richtung, nämlich hier der ersten Richtung (Pfeil 32) durchströmt. Ferner sind die beiden Hülsen 13a, 13b der Kühlhülsenpatrone 12 innerhalb der Rotorwelle 2 sowie außerhalb der Antriebswelle 26 über die Dichtungen 18, 24 abgedichtet und durch das mindestens eine Stützlager 20 innerhalb der Rotorwelle 2 gelagert.

Bei dem Betrieb des Kühlsystems 28 ist es möglich, dass das Kühlmedium den Vorlauf sowie den Rücklauf und somit den ersten und zweiten Strömungsraums 6, 14, die u. a. durch die Hülsen 13a, 13b der Kühlhülsenpatrone 12 begrenzt sind, bei rotierender Rotorwelle 2 kavitationsfrei durchströmen kann. Dabei wird ein axiales Einströmen des Kühlmediums in den als Vorlauf ausgebildeten ersten Strömungsraum 14 durch einen Einlass mit einer ersten, kleinstmöglichsten Querschnittsfläche gewährleistet. Diese kleinstmögliche Querschnittsfläche entspricht einem Durchmesser, der durch einen hydraulischen Querschnitt durch die elektrische Maschine gegeben ist. Hierdurch können für das Kühlmedium Engstellen vermieden werden, ohne dass die Querschnittsfläche größer als erforderlich ist.

Dagegen wird ein axiales Ausströmen aus dem zweiten, als Rücklauf ausgebildeten Strömungsraum 6 durch einen Auslass mit einer zweiten, größtmöglichen Querschnittsfläche gewährleistet, die größer als die erste Querschnittsfläche ist, wobei das axial ausströmende Kühlmedium durch die Rotationswelle in Rotation versetzt wird. Hier ist der Einlass kreisringförmig ausgebildet und durch die beiden Hülsen 13a, 13b begrenzt. Der Auslass ist hier kreisringförmig ausgebildet und durch die äußere Hülsen 13b und die Rotorwelle 2 begrenzt. Bei der Ausführungsform des Kühlsystems 28 bzw. der elektrischen Maschine wird dem rotierenden Kühlmedium, bspw. Wasser, das hier zurückfließt (Pfeile 32), die größtmögliche Querschnittsfläche bereitgestellt. Je größer die Querschnittsfläche durch den Auslass des Strömungsraum 6 an dem rotierenden Kühlmedium ist, desto geringer sind Strömungsverluste. Außerdem werden hierdurch etwaige resultierende Druckverluste des Kühlmediums minimiert. Durch Einstellen der kleinstmöglichen Querschnittsfläche und der größtmöglichen Querschnittsfläche und somit eines Verhältnisses der Querschnittsflächen zueinander kann der Übergangsbereich 22 kavitationsfrei ausgebildet werden.

Infolge eines Höhenniveaus zwischen dem Einlauf und dem Auslass an der sich drehenden Rotorwelle 2 wird im Kühlsystem 28, ähnlich wie bei einer Pumpe, für das flüssige Kühlmedium ein Druck aufgebaut. Hierdurch wird im Kühlsystem 28 ein systembedingter Verlust des gesamten Drucks des Mediums reduziert. Beim Betrieb der elektrischen Maschine ergibt sich zwischen den beiden stationären Hülsen 13a, 13b, die den ersten Strömungsraum 14 und somit den Vorlauf umschließen, für das Kühlmedium eine stehende und/oder stationäre Flüssigkeitssäule. Da die Rotorwelle 2 neben der zweiten Hülse 13b den zweiten Strömungsraum 6 und somit den Rücklauf umschließt, ergibt sich für das Kühlmedium eine zweite rotierende Flüssigkeitssäule.

An bzw. in dem Übergangsbereich 22 zwischen Vorlauf und Rücklauf bzw. zwischen den beiden Strömungsbereichen bzw. Strömungsräumen 6, 14 an den Hülsen 13a, 13b bzw. in der stationären Kühlhülsenpatrone 12 ergeben sich für das durch den ersten Strömungsraum 14 laminar einströmende Kühlmedium erst in dem Übergangsbereich 22 als Übergangsstelle hin zu der Rotorwelle 2 Turbulenzen. Kräfte einer rotierenden Flüssigkeitssäule des Kühlmediums innerhalb des zweiten Strömungsraums 6 ergeben sich praktisch erst außerhalb der zweiten Hülse 13b der stationären Kühlhülsenpatrone 12.

Aufgrund des koaxialen Aufbaus der stationären Kühlhülsenpatrone 12 der beiden Hülsen 13a, 13b führt ein axiales Anströmen bzw. Einströmen des Kühlmediums zu einem minimalen Druckgradienten und somit zu einem kavitationsfreien Übergang zwischen einer stehenden und einer rotierenden Flüssigkeitssäule des Kühlmediums.

## Patentansprüche

1. Elektrische Maschine, die ein Gehäuse (10), eine Rotorwelle (2) für einen Rotor (4), eine Antriebswelle (26) und ein Kühlsystem (28) aufweist, wobei die Antriebswelle (26) und die Rotorwelle (2) relativ zu dem Gehäuse (10) drehbar sind,
**dadurch gekennzeichnet,**
**dass** das Kühlsystem (28) der elektrischen Maschine eine erste und eine zweite Hülse (13a, 13b) umfasst, wobei eine erste Hülse (13a) die Antriebswelle (26) koaxial umschließt, wobei eine zweite Hülse (13b) die erste Hülse (13a) koaxial umschließt, wobei die erste Hülse (13a) und die zweite Hülse (13b) einen ersten Strömungsraum (14) für ein Kühlmedium begrenzen, wobei die Rotorwelle (2) die zweite Hülse (13b) koaxial umschließt, wobei die zweite Hülse (13b) und die Rotorwelle (2) einen zweiten Strömungsraum (6) für das Kühlmedium begrenzen, wobei die beiden Hülsen (13a, 13b) mit dem Gehäuse (10) stationär verbunden sind, wobei ein erster der beiden Strömungsräume (14) als Vorlauf und ein zweiter der beiden Strömungsräume (6) als Rücklauf für das Kühlmedium verwendbar ist, wobei das Kühlmedium bei einem Betrieb des Kühlsystems (28) in einer ersten axial orientierten Richtung durch den Vorlauf strömt, wobei das Kühlmedium in einer radialen Richtung von dem Vorlauf zu dem Rücklauf strömt, und wobei das Kühlmedium in einer zweiten axial orientierten Richtung, die entgegengesetzt zu der ersten axial orientierten Richtung orientiert ist, durch den Rücklauf strömt.

2. Elektrische Maschine nach Anspruch 1, bei der die beiden Strömungsräume (6, 14) durch einen Übergangsbereich (22) miteinander verbunden sind.

3. Elektrische Maschine nach Anspruch 2, bei der das Kühlmedium in der radialen Richtung durch den Übergangsbereich (22) strömt.

4. Elektrische Maschine nach einem der voranstehenden Ansprüche, bei der der als Rücklauf ausgebildete Strömungsraum (14) den als Vorlauf ausgebildeten Strömungsraum (6) koaxial umschließt.

5. Elektrische Maschine nach einem der voranstehenden Ansprüche, bei der die Rotorwelle (2) die Antriebswelle (26) koaxial umschließt, wobei Komponenten des Kühlsystems (28) zwischen der Antriebswelle (26) und der Rotorwelle (2) angeordnet sind.

6. Elektrische Maschine nach einem der voranstehenden Ansprüche, bei der die Rotorwelle (2) als Träger eines Rotors (4) ausgebildet ist und dazu konfiguriert ist, den Rotor (4) relativ zu einem Stator mit einer Drehzahl der elektrischen Maschine zu drehen, wobei die Antriebswelle (26) zum Antreiben einer externen Vorrichtung ausgebildet ist und dazu konfiguriert ist, sich mit einer Drehzahl der externen Vorrichtung zu drehen.

## Claims

1. Electric machine which has a housing (10), a rotor shaft (2) for a rotor (4), a drive shaft (26) and a cooling system (28), wherein the drive shaft (26) and the rotor shaft (2) are rotatable relative to the housing (10),
**characterised in that**
the cooling system (28) of the electric machine comprises a first and a second sleeve (13a, 13b), wherein a first sleeve (13a) coaxially surrounds the drive shaft (26), wherein a second sleeve (13b) coaxially surrounds the first sleeve (13a), wherein the first sleeve (13a) and the second sleeve (13b) define a first flow chamber (14) for a cooling medium, wherein the rotor shaft (2) coaxially surrounds the second sleeve (13b), wherein the second sleeve (13b) and the rotor shaft (2) define a second flow chamber (6) for the cooling medium, wherein the two sleeves (13a, 13b) are connected in a stationary manner to the housing (10), wherein a first of the two flow chambers (14) can be used as a forward flow line and a second of the two flow chambers (6) can be used as a return line for the cooling medium, wherein the cooling medium during the operation of the cooling system (28) flows through the forward flow line in a first axially oriented direction, wherein the cooling medium flows in a radial direction from the forward flow line to the return line and wherein the cooling medium flows through the return line in a second axially oriented direction, which is oriented opposite the first axially oriented direction.

2. Electric machine according to claim 1, in which the two flow chambers (6, 14) are connected to one another via a transitional area (22).

3. Electric machine according to claim 2, in which the cooling medium flows in radial direction through the transitional area (22).

4. Electric machine according to any of the preceding claims, in which the flow chamber (14) designed as a return line coaxially surrounds the flow chamber (6) designed as a forward flow line.

5. Electric machine according to any of the preceding claims, in which the rotor shaft (2) coaxially surrounds the drive shaft (26), wherein components of the cooling system (28) are arranged between the drive shaft (26) and the rotor shaft (2).

6. Electric machine according to any of the preceding claims, in which the rotor shaft (2) is designed as a support of a rotor (4) and is configured to rotate the rotor (4) relative to a stator at a speed of the electric machine, wherein the drive shaft (26) is designed for driving an external device and is configured to rotate at a speed of the external device.

## Revendications

1. Machine électrique, qui présente un boîtier (10), un arbre de rotor (2) pour un rotor (4), un arbre d'entraînement (26) et un système de refroidissement (28), dans laquelle l'arbre d'entraînement (26) et l'arbre de rotor (2) peuvent tourner par rapport au boîtier (10),
**caractérisée en ce**
**que** le système de refroidissement (28) de la machine électrique comprend un premier et un second manchon (13a, 13b), dans laquelle un premier manchon (13a) entoure de manière coaxiale l'arbre d'entraînement (26), dans laquelle un second manchon (13b) entoure de manière coaxiale le premier manchon (13a), dans laquelle le premier manchon (13a) et le second manchon (13b) délimitent un premier espace d'écoulement (14) pour un milieu de refroidissement, dans laquelle l'arbre de rotor (2) entoure de manière coaxiale le second manchon (13b), dans laquelle le second manchon (13b) et l'arbre de rotor (2) délimitent un second espace d'écoulement (6) pour le milieu de refroidissement, dans laquelle les deux manchons (13a, 13b) sont reliés de manière stationnaire au boîtier (10), dans laquelle un premier des deux espaces d'écoulement (14) peut être utilisé en tant qu'arrivée et un second des deux espaces d'écoulement (6) peut être utilisé en tant que retour pour le milieu de refroidissement, dans laquelle le milieu de refroidissement s'écoule lors d'un fonctionnement du système de refroidissement (28) dans une première direction orientée de manière axiale à travers l'arrivée, dans laquelle le milieu de refroidissement s'écoule dans une direction radiale depuis l'arrivée vers le retour, et dans laquelle le milieu de refroidissement s'écoule dans une seconde direction orientée de manière axiale, qui est orientée à l'opposé de la première direction orientée de manière axiale, à travers le retour.

2. Machine électrique selon la revendication 1, où les deux espaces d'écoulement (6, 14) sont reliés l'un à l'autre par une zone de transition (22).

3. Machine électrique selon la revendication 2, où le milieu de refroidissement s'écoule dans la direction radiale à travers la zone de transition (22).

4. Machine électrique selon l'une quelconque des revendications précédentes, où l'espace d'écoulement (14) réalisé en tant que retour entoure de manière coaxiale l'espace d'écoulement (6) réalisé en tant qu'arrivée.

5. Machine électrique selon l'une quelconque des revendications précédentes, où l'arbre de rotor (2) entoure de manière coaxiale l'arbre d'entraînement (26), dans laquelle des composants du système de refroidissement (28) sont disposés entre l'arbre d'entraînement (26) et l'arbre de rotor (2).

6. Machine électrique selon l'une quelconque des revendications précédentes, où l'arbre de rotor (2) est réalisé en tant que support d'un rotor (4) et est configuré pour faire tourner le rotor (4) par rapport à un stator à une vitesse de rotation de la machine électrique, dans laquelle l'arbre d'entraînement (26) est réalisé pour entraîner un dispositif externe et est configuré pour tourner à une vitesse de rotation du dispositif externe.
